# EUROPÄISCHE PATENTANMELDUNG

(11) **EP 0 941 755 A1**
(43) Veröffentlichungstag der Anmeldung: **15.09.1999**
(21) Anmeldenummer: 99102573.5
(22) Anmeldetag: 11.02.1999
(51) Int. Cl.: B01D 17/02, B01D 29/35, B01D 61/14, B01D 61/16, B01D 63/06, C02F 9/00

(54) **Verfahren und Vorrichtung zum Reinigen von industriellem Abwasser aus Druckereien**

(30) Priorität: 13.03.1998 DE 19810976
(71) Anmelder: Recosoil Recycling GmbH, 88662 Überlingen (DE)
(72) Erfinder: Funk, Hellmut, 88662 Überlingen (DE)
(74) Vertreter: Fleck, Hermann-Josef, Dr.-Ing.

(57) **Zusammenfassung**

Die Erfindung betrifft ein Verfahren und eine Vorrichtung zum Reinigen von industriellem Abwasser aus Druckereien, das Farbstoffe, Lösungsmittel, Puder, Papierstaub und Wasser enthält, bei dem die Feststoffe mittels Feinfilterung aus dem Abwasser abgeschieden und das Lösungsmittel von Abwasser getrennt werden. Ist vorgesehen, daß das anfallende Abwasser in einem Sammelbehälter durch Absetzen in einen unteren Abwasserkanal mit einem spezifischen Gewicht ≥ 1 und in einen oberen Abwasseranteil mit einem spezifischen Gewicht < 1 vorgetrennt wird, daß aus dem unteren und oberen Abwasseranteil mittels einer mobilen Feinfilteranlage die enthaltenen Verunreinigungen ausgefiltert werden, daß die ausgefilterten Verunreinigungen als Sondermüll gesammelt und der Entsorgung zugeführt werden und daß das aus dem unteren Abwasseranteil ausgefilterte Wasser dem örtlichen Abwassersystem und das aus dem oberen Abwasseranteil ausgefilterte Lösungsmittel wieder dem Arbeitsprozeß zugeführt werden, dann läßt sich in den Druckereien das angefallene Abwasser ohne dort installierte Reinigungsvorrichtung so behandeln, daß der Anteil des Sondermülls auf ein Minimum reduziert wird und der wesentliche Anteil des ausgefilterten Lösungsmittels wieder verwendet werden kann.

## Beschreibung

Die Erfindung betrifft ein Verfahren und eine Vorrichtung zur Durchführung des Verfahrens zum Reinigen von industriellem Abwasser aus Druckereien, das Farbstoffe, Lösungsmittel, Puder, Papierstaub und Wasser enthält, bei dem die Feststoffe mittels Feinfilterung aus dem Abwasser abgeschieden und das Lösungsmittel von Abwasser getrennt werden.

Ein derartiges Verfahren mit Vorrichtung ist aus der EP 0 250 394 A2 bekannt. Dabei wird das Abwasser nach einer Grobfilterung feinfiltriert, wobei die im Abwasser enthaltenen Farbstoffe abgeschieden werden. Danach wird das filtrierte Abwasser unter Verwendung von Luft als Desorptionsmittel desorbiert bzw. gestrippt. Dadurch wird zumindest der überwiegende Teil der noch im Abwasser vorhandenen Verunreinigungen, vor allem organische Lösungsmittel und gegebenenfalls Tenside aus dem Abwasser entfernt. Dazu ist eine umfangreiche und teuere Vorrichtung erforderlich, die aus Kostengründen nicht in jeder Druckerei nur für diesen Zweck installiert werden kann.

Aus diesem Grund wird das in Druckereien anfallende Abwasser der Einfachheit halber zur Gänze als Sondermüll einer teueren Entsorgung zugeführt.

Es ist Aufgabe der Erfindung, ein Verfahren und eine Vorrichtung zur Durchführung des Verfahrens der eingangs erwähnten Art zu schaffen, das ohne teuere installierte Vorrichtungen in den Druckereien durchgeführt werden kann und insbesondere das aus dem Abwasser ausfiltrierte Lösungsmittel wieder verwendbar macht.

Diese Aufgabe wird nach der Erfindung in einem Verfahren dadurch gelöst, daß das anfallende Abwasser in einem Sammelbehälter durch Absetzen in einen unteren Abwasserkanal mit einem spezifischen Gewicht ≥ 1 und in einen oberen Abwasseranteil mit einem spezifischen Gewicht < 1 vorgetrennt wird, daß aus dem unteren und oberen Abwasseranteil mittels einer mobilen Feinfilteranlage die enthaltenen Verunreinigungen ausgefiltert werden, daß die ausgefilterten Verunreinigungen als Sondermüll gesammelt und der Entsorgung zugeführt werden und daß das aus dem unteren Abwasseranteil ausgefilterte Wasser dem örtlichen Abwassersystem und das aus dem oberen Abwasseranteil ausgefilterte Lösungsmittel wieder dem Arbeitsprozeß zugeführt werden.

Dieses Verfahren nützt die Erkenntnis aus, daß sich im angesammelten Abwasser bereits eine Vortrennung nach spezifischem Gewicht vollzieht, so daß zwei Abwasseranteile im Sammelbehälter entstehen, von denen der obere vorzugsweise mit Lösungsmittel und der untere mit Wasser angereichert ist. Beide Abwasseranteile werden einer Feinfilterung unterzogen und dabei Lösungsmittel bzw. Wasser ausgefiltert. Das Wasser braucht dabei nur den Reinheitsgrad wie kommunales Abwasser aufzuweisen, um direkt in den örtlichen Abwasserkanal geleitet zu werden. Das ausgefilterte Lösungsmittel wird gesammelt und wieder dem Arbeitsprozeß zugeführt. Nur die nach der Feinfilterung verbleibenden Verunreinigungen werden als wesentlich reduzierter Sondermüll entsorgt. Die Feinfilteranlage ist mobil, so daß sie in jede Druckerei gebracht und zur Reinigung des dort angefallenen Abwassers eingesetzt werden zu können. Die Druckereien benötigen keine Reinigungsvorrichtungen und erhalten einen Großteil des verwendeten Lösungsmittels wieder zur weiteren Verwendung zurück. Der Bedarf an Lösungsmittel ist um ein erhebliches Maß reduziert, was zudem zu einer Kostenersparnis führt, da nicht mehr so viel Lösungsmittel eingekauft und der Anteil an zu entsorgendem Sondermüll beachtlich reduziert ist.

Das Verfahren läßt sich nach einer Ausgestaltung so durchführen, daß der untere und der obere Abwasseranteil zeitlich nacheinander in einem einzigen Feinfiltervorgang oder in zwei getrennten Feinfiltervorgängen behandelt wird. Größere Mengen an Abwasser lassen sich auch so behandeln, daß der untere und der obere Abwasseranteil in zwei parallel ablaufenden Feinfiltervorgängen gleichzeitig behandelt werden.

Nach einer vorteilhaften Ausgestaltung ist vorgesehen, daß der obere und untere Abwasseranteil mittels einer ermittelten Trennschicht gegeneinander abgetrennt werden, daß der untere Abwasserkanal im Bodenbereich des Sammelbehälters abgesaugt wird und daß der obere Abwasseranteil über der Trennschicht vorzugsweise schwimmergesteurt abgesaugt wird. Mit der Schwimmersteuerung kann die Absaugleitung im oberen Abwasseranteil dem Absinken der Trennschicht nachgeführt werden.

Ist vorgesehen, daß der obere und/oder untere Abwasseranteil kontinuierlich abgesaugt und mehreren parallel geschalteten Feinfilterkreisen zugeführt wird, daß aus den Feinfilterkreisen kontinuierlich Lösungsmittel und/oder Abwasser ausgefiltert und einem Lösungsmittelbehälter und/oder einem Abwasserkanal zugeführt wird und daß von dem in den Feinfilterkreisen zirkulierenden Verunreinigungen stets ein vorgebbarer Anteil einem Sondermüllbehälter zugeführt wird, dann ergibt sich ein kontinuierlicher Arbeitsablauf, da den Feinfilterkreisen dauernd Abwasser zugeführt und Lösungsmittel und/oder Abwasser ausgefiltert sowie Verunreinigungen aus den Feinfilterkreisen abgeleitet werden kann.

Ist nach einer Ausgestaltung vorgesehen, daß die Feinfilterkreise aus Filtereinheiten aufgebaut werden, die zwischen lösbaren Verschraubungen austauschbar einbezogen werden, und daß die einzelnen Feinfilterkreise mittels Zulaufventilen und Ablaufventilen gegeneinander entkoppelt werden, dann können einzelne Feinfilterkreise abgeschaltet und die Filtereinheiten zum Reinigen der Filterelemente ausgetauscht werden, ohne den Betrieb der Anlage stillsetzen zu müssen.

Dabei hat sich als vorteilhaft erwiesen, daß als Feinfilter der Filtereinheiten (FE) hochtemperaturbeständige Filter, wie Keramik- oder Edelstahlfilter, verwendet werden, die verschmutzt ausgetauscht und in einem durch Temperatur und Zeit vorgebbaren Brennvorgang gereinigt werden. Die gereinigten Filterelemente sind dann nicht nur sehr gründlich gereinigt, sie sind auch erneut zum Feinfiltrieren einsetzbar, wenn die Wärmebehandlung in der Druckerei, z.B. in einem mitgeführten Ofen durchgeführt wird.

Eine Vorrichtung zur Durchführung des Verfahrens ist nach der Erfindung dadurch gekennzeichnet, daß eine Saugpumpe den oberen und/oder den unteren Abwasseranteil aus dem Sammelbehälter saugt und den angesaugten Abwasseranteil über eine Überströmpumpe mindestens einem Feinfilterkreis umlaufend zuführt, daß das aus den Feinfilterkreisen ausgefilterte Wasser dem örtlichen Abwasserkanal und das ausgefilterte Lösungsmittel einem Lösungsmittelbehälter zuführbar ist und daß die im Feinfilterkreis umlaufend verbleibenden Verunreinigungen in einen Sondermüllbehälter ableitbar sind.

Eine Vorrichtung für zeitlich aufeinanderfolgende Behandlung der Abwasseranteile ist dadurch gekennzeichnet, daß eine einzige Saugpumpe über zwei Absperrventile und zwei Absaugleitungen wahlweise mit dem oberen und unteren Teil des Sammelbehälters verbindbar ist, daß die Saugpumpe über eine einzige Überströmpumpe über Zulaufventile mehrere parallel geschaltete Feinfilterkreise speist, die ausgangsseitig über Ablaufventile auf den Eingang der Überströmpumpe zurückgeführt sind und daß das aus den Feinfilterkreisen ausgefilterte Lösungsmittel oder Abwasser über eine Schalteinrichtung wahlweise dem Lösungsmittelbehälter oder dem örtlichen Abwasserkanal zuführbar ist, wobei diese Reinigungsanlage auch doppelt vorhanden sein kann, wenn man die Abwasseranteile getrennt behandeln will.

Eine Vorrichtung zur gleichzeitig erfolgenden Behandlung der Abwasseranteile ist dadurch gekennzeichnet, daß dem oberen und dem unteren Abwasseranteil je eine Saugpumpe mit eigener Ablaufleitung zugeordnet ist, daß die Saugpumpen jeweils über eine zugeordnete Überströmpumpe mehrere Feinfilterkreise speisen, daß das aus den dem oberen Abwasseranteil zugeordneten Feinfilterkreisen ausgefilterte Lösungsmittel dem Lösungsmittelbehälter und das aus den dem unteren Abwasseranteil zugeordneten Feinfilterkreisen ausgefilterte Wasser dem örtlichen Abwasserkanal zuführbar ist und daß die in allen Feinfilterkreisen zirkulierenden Verunreinigungen in den Sondermüllbehälter abführbar sind.

Die Austauschbarkeit der Feinfilter während des laufenden Betriebs wird dadurch realisiert, daß ein Feinfilterkreis zwischen dem Zulaufventil und dem Ablaufventil mindestens eine Filtereinheit aufweist, die aus einen in einem Sammelrohr mit Ablauf untergebrachten, durchströmbaren Filterelement besteht, und daß die axialen Enden des Filterelementes mittels lösbarer Verschraubungen in den Feinfilterkreis einbezogen sind, wobei das Filterelement in den Verschraubungen mittels Dichtungselementen zum Sammelrohr hin abgedichtet ist. Die Feinfilterkreise sind dabei vorzugsweise so ausgelegt, daß in jedem Feinfilterkreis mindestens zwei Filtereinheiten mit Verschraubungen austauschbar in Reihe angeordnet sind. Die Filterflächen werden dadurch vergrößert, ohne pro Feinfilter ein Zulaufventil und ein Ablaufventil vorsehen zu müssen.

Das Nachführen von angesaugtem Abwasser und das Ausfiltern von Abwasser und Lösungsmittel läßt sich wie das Ableiten der Verunreinigung dadurch beeinflussen, daß das ausgefilterte Abwasser und/oder Lösungsmittel sowie die abgeleiteten Verunreinigungen über individuelle Meß- und/oder Schalteinrichtungen dem Abwasserkanal, dem Lösungsmittelbehälter und dem Sondermüllbehälter dosiert zuführbar sind. Die Meß- und/oder Schalteinrichtungen lassen sich auf bestimmte Mengen oder bestimmte Zeiten einstellen.

Die Mobilität der Vorrichtung läßt sich auf verschiedene Weise erreichen. So können z.B. die benötigten Elemente als Gesamtanlage auf einem Fahrzeuganhänger montiert sein, der mit einem Kraftfahrzeug zu jeder Druckerei gebracht werden kann.

Die Erfindung wird anhand von in den Zeichnungen dargestellten Ausführungsbeispielen näher erläutert. Es zeigen:
- Fig.: 1 im Blockschaltbild eine Vorrichtung zur Durchführung des erfindungsgemäßen Verfahrens, bei dem die beiden Abwasseranteile zeitlich nacheinander behandelt werden,
- Fig. 2: im Blockschaltbild eine Vorrichtung zur Durchführung des erfindungsgemäßen Verfahrens, bei dem die beiden Abwasseranteile gleichzeitig behandelt werden und
- Fig. 3: im vergrößerten Querschnitt eine Verschraubung, in der ein Filterelement zum umgebenden Sammelrohr der Filtereinheit abgedichtet und leicht austauschbar ist.

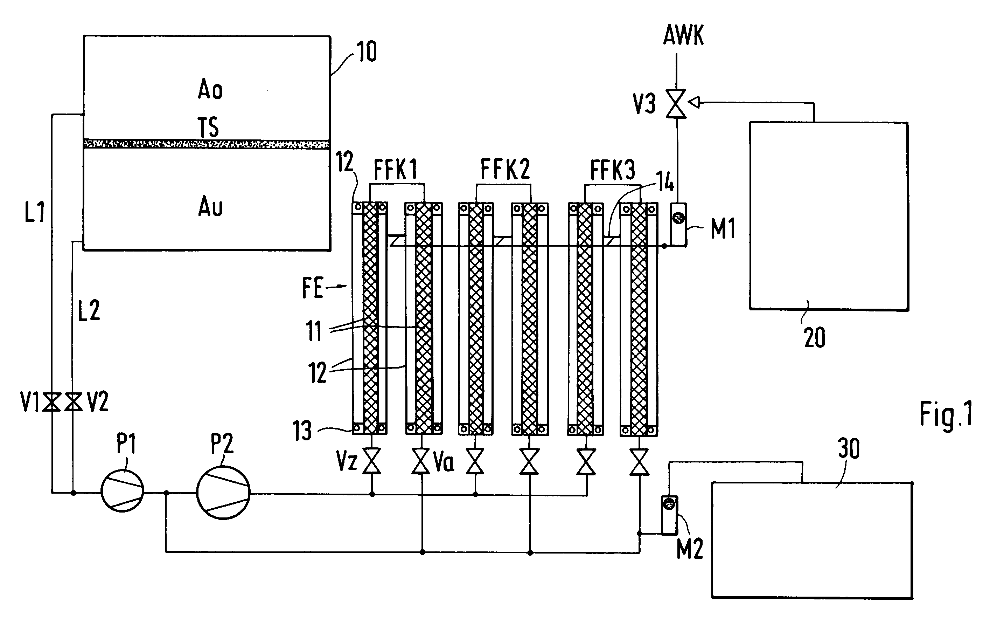

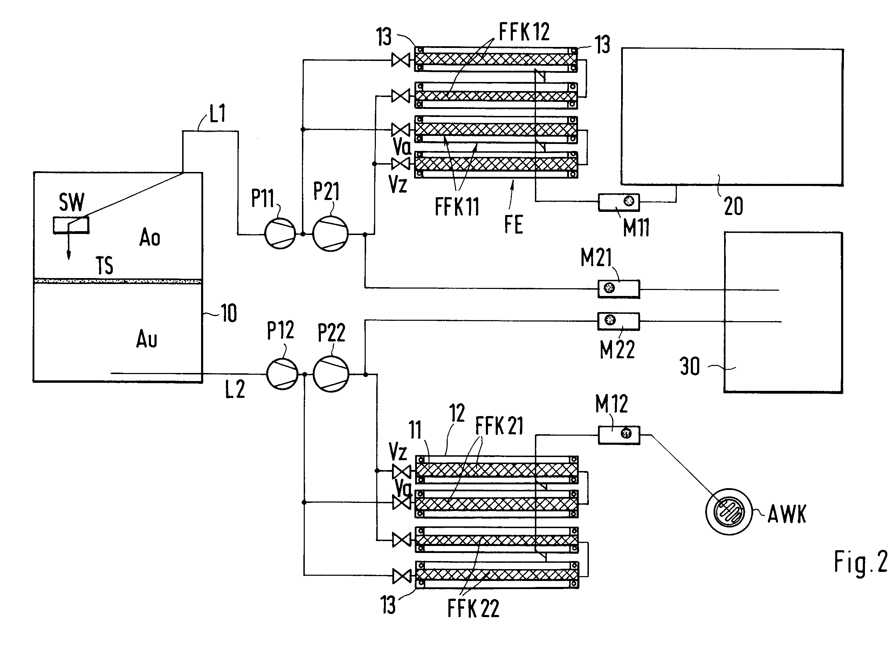

In der Druckerei wird das anfallende Abwasser, das mit Farbstoffen, Puder, Wasser, Lösungsmittel und Papierstaub verunreinigt ist, in einem Sammelbehälter 10 gesammelt. Ist ausreichend Abwasser angesammelt, dann wird eine mobile Feinfilteranlage der nachstehend beschriebenen Art gemäß Fig. 1 oder Fig. 2 in die Druckerei gebracht und mit der Reinigung begonnen. Dabei wird die Erkenntnis ausgenützt, daß sich im Sammelbehälter 10 eine Art Trennschicht TS zwischen einem oberen Abwasseranteil Ao und einem unteren Abwasseranteil Au allein aufgrund des unterschiedlichen spezifischen Gewichts der Inhaltsstoffe gebildet ist. Dabei ist im oberen Abwasseranteil Ao mit einem spezifischen Gewicht < 1 vorwiegend das Lösungsmittel und leichte Verunreinigungen enthalten, während der untere Abwasseranteil Au vorwiegend Wasser und schwere Verunreinigungen mit einem spezifischen Gewicht ≥ 1 enthält. An dem Sammelbehälter 10 gehen zwei Absaugleitungen L1 und L2 ab, die vorzugsweise mit ihren Ansaugenden in den Sammelbehälter 10 eingeführt und in die Abwasseranteile Ao und Au reichen. Die Absaugleitungen L1 und L2 sind mit Absperrventilen V1 und V2 versehen, die wahlweise die Absaugung über die Absaugleitung L1 und L2 freigeben bzw. sperren.

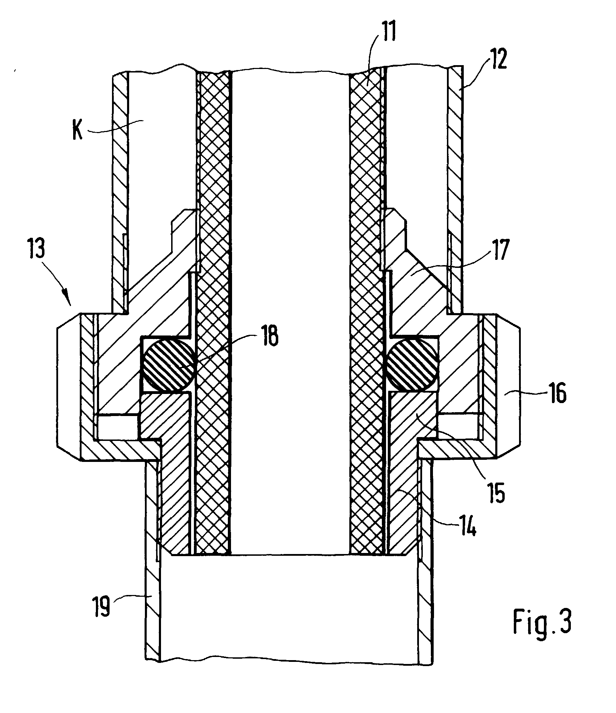

Der abgesaugte Abwasseranteil Ao und Au wird zeitlich nacheinander über eine Saugpumpe P1 einem Feinfiltervorgang zugeführt. Die Saugpumpe P1 führt den abgesaugten Abwasseranteil Ao oder Au über eine Überströmpumpe P2 und hoher Geschwindigkeit und Druck drei parallelgeschalteten Feinfilterkreisen FFK1, FFK2 und FFK3 zu. Dabei ist im Eingang jedes Feinfilterkreises ein Zulaufventil Vz und im Ausgang ein Ablaufventil Va eingeschleift. Zwischen dem Zulaufventil Vz und dem Ablaufventil Va sind jeweils zwei Filterelemente FE in Reihe geschaltet. Ein Filterelement FE umfaßt ein in Längsrichtung durchströmbares Filterelement 11, das von einem Sammelrohr 12 umgeben ist. Filterelement 11 und Sammelrohr 12 des Filterelements FE sind an beiden Enden in lösbaren Verschraubungen 13 austauschbar und gegeneinander abgedichtet gehalten, wie anhand des Querschnittes nach Fig. 3 gezeigt ist.

Die Verschraubung 13 besteht aus zwei Verschraubungsteilen 14 und 17, die über eine Überwurfmutter 16 miteinander verbindbar sind. Die Verschraubungsteile 14 und 17 nehmen das Ende des Filterelementes 11 auf, wobei zwischen den Verschraubungsteilen 14 und 17 eine Ringdichtung 18 angeordnet ist, die die zwischen Filterelement 11 und beabstandetem Sammelrohr 12 gebildete Kammer K zum Eingang und Ausgang der Filtereinheit FE hin abgedichtet. Das durch das Filterelement 11 quer ausgefilterte Lösungsmittel oder Wasser kann in diese Kammer K gelangen und fließt über einen Auslauf 14 ab. Die ankommende bzw. abgehende Leitung 19 ist mit dem Verschraubungsteil 14 und der Bund 15 desselben wird mit der Überwurfmutter 16 gegen das Verschraubungsteil 17 gedrückt. Daher wird die Ringdichtung 18 verspannt.

Eine Meß- und Schalteinrichtung M1 führt zu einer Schalteinrichtung V3, die wahlweise das ausgefilterte Lösungsmittel einem Lösungsmittelbehälter 20 zur Wiederverwendung zuführt oder im Falle des ausgefilterten Wassers dieses dem örtlichen Abwasserkanal AWK zuleitet.

Nach dem Passieren der Feinfilterkreise werden die zirkulierenden Verunreinigungen wieder dem Eingang der Überströmpumpe P2 zugeführt. Ein Teil der Verunreinigungen wird über eine Meß- und Schalteinrichtung M2 dem Sondermüllbehälter 30 zugeführt. Dabei kann die Meß- und Schalteinrichtung M2 nur zeitweise Verunreinigungen ableiten oder auch kontinuierlich einen vorgebbaren Anteil der zirkulierenden Menge ableiten.

Selbstverständlich kann an jeder Absaugleitung L1 und L2 eine Reinigungsvorrichtung nach Fig. 1 angeschaltet sein. Dabei kann die zeitlich aufeinanderfolgende Behandlung der beiden Abwasseranteile Ao und Au beibehalten werden. Es kann jedoch auch ein Parallelbetrieb gewählt werden, wie Fig 2 zeigt. Dabei wird in einem ersten Reiniungsvorgang der obere Abwasseranteil Ao behandelt, wobei die Saugpumpe P1, die Überströmpumpe P11 und die Feinfilterkreise FFK11 und FFK12 auf den Lösungsmittelbehälter 20 und den Sondermüllbehälter 30 arbeiten. Diese Behälter werden über Meß- und Schalteinrichtungen M11 und M12 versorgt. Die Ablaufleitung L1 im oberen Abwasseranteil Ao wird dabei mittels Schwimmer SW so gesteuert, daß sie dem Absinken der Trennschicht TS folgen kann.

In einem zweiten Reinigungsprozeß, der parallel verläuft, wird im Bodenbereich des Sammelbehälters 10 Abwasseranteile Au abgesaugt, wie die Saugpumpe P12 an der Absaugleitung L2 zeigt. Überströmpumpe P22 und die Feinfilterkreise FFK21 und FFK22 filtern das Wasser aus und führen es über die Meß- und Schalteinrichtung M12 dem örtlichen Abwasserkanal AWK zu, während abgeleitete Verunreinigungen über die Meß- und Schalteinrichtung M22 auch in den Sondermüllbehälter 30 gelangen. Die Abzweigung des Mittels an Verunreinigungen kann an beliebiger Stelle der Feinfilterkreise, d.h. am Eingang oder Ausgang derselben, erfolgen.

Selbstverständlich lassen sich auch bei der Vorrichtung nach Fig. 2 in jedem Feinfilterkreis mehr als zwei Filtereineheiten FE in Reihe schalten und die Anzahl der parallelgeschalteten Feinfilterkreise FFK ist nicht auf zwei beschränkt. In jedem Fall lassen sich über die lösbaren Verschraubungen 13 die Filterelemente FE leicht austauschen und die Filterelemente 11 zum Reinigen durch Wärmebelastung entnehmen.

Diese austauschbare Anordnung der Filtereinheiten FE in parallelgeschalteten Feinfilterkreisen einer Feinfilteranlage ist nicht auf die gezeigte Reinigungsvorrichtung für Druckerei-Abwässer beschränkt, sie ist in allen Feinfilteranlagen in gleich vorteilhafter Weise anwendbar. Dasselbe gilt auch für die Reinigung der temperaturbeständigen Filterelemente 11 durch Wärmebehandlung.

## Patentansprüche

1. Verfahren zum Reinigen von industriellem Abwasser aus Druckereien, das Farbstoffe, Lösungsmittel, Puder, Papierstaub und Wasser enthält, bei dem die Feststoffe mittels Feinfilterung aus dem Abwasser abgeschieden und das Lösungsmittel von Abwasser getrennt werden,
dadurch gekennzeichnet,
daß das anfallende Abwasser in einem Sammelbehälter (10) durch Absetzen in einen unteren Abwasserkanal (Au) mit einem spezifischen Gewicht ≥ 1 und in einen oberen Abwasseranteil (Ao) mit einem spezifischen Gewicht < 1 vorgetrennt wird,
daß aus dem unteren und oberen Abwasseranteil (Au und Ao) mittels einer mobilen Feinfilteranlage die enthaltenen Verunreinigungen ausgefiltert werden,
daß die ausgefilterten Verunreinigungen als Sondermüll gesammelt und der Entsorgung zugeführt werden und
daß das aus dem unteren Abwasseranteil (Au) ausgefilterte Wasser dem örtlichen Abwassersystem und das aus dem oberen Abwasseranteil (Ao) ausgefilterte Lösungsmittel wieder dem Arbeitsprozeß zugeführt werden.

2. Verfahren nach Anspruch 1,
dadurch gekennzeichnet,
daß der untere und der obere Abwasseranteil (Au und Ao) zeitlich nacheinander in einem einzigen Feinfiltervorgang (Fig. 1) oder in zwei getrennten Feinfiltervorgängen behandelt wird.

3. Verfahren nach Anspruch 1,
dadurch gekennzeichnet,
daß der untere und der obere Abwasseranteil (Au und Ao) in zwei parallel ablaufenden Feinfiltervorgängen (Fig. 2) gleichzeitig behandelt werden.

4. Verfahren nach einem der Ansprüche 1 bis 3,
dadurch gekennzeichnet,
daß der obere und untere Abwasseranteil (Ao, Au) mittels einer ermittelten Trennschicht (TS) gegeneinander abgetrennt werden,
daß der untere Abwasserkanal (Au) im Bodenbereich des Sammelbehälters (10) abgesaugt wird und
daß der obere Abwasseranteil (Ao) über der Trennschicht (TS) vorzugsweise schwimmergesteurt (sw) abgesaugt wird.

5. Verfahren nach einem der Ansprüche 1 bis 4,
dadurch gekennzeichnet,
daß der obere und/oder untere Abwasseranteil (Ao, Au) kontinuierlich abgesaugt und mehreren parallel geschalteten Feinfilterkreisen (FFK1, FFK2, FFK3; FFK11, FFK12; FFK21, FFK22) zugeführt wird,
daß aus den Feinfilterkreisen kontinuierlich Lösungsmittel und/oder Abwasser ausgefiltert und einem Lösungsmittelbehälter (20) und/oder einem Abwasserkanal (AWK) zugeführt wird und
daß von dem in den Feinfilterkreisen zirkulierenden Verunreinigungen stets ein vorgebbarer Anteil einem Sondermüllbehälter (30) zugeführt wird.

6. Verfahren nach einem der Ansprüche 1 bis 5,
dadurch gekennzeichnet,
daß die Feinfilterkreise (FFK1, FFK2, FFK3; FFK11, FFK12; FFK21, FFK22) aus Filtereinheiten (FE) aufgebaut werden, die zwischen lösbaren Verschraubungen (13) austauschbar einbezogen werden, und
daß die einzelnen Feinfilterkreise mittels Zulaufventilen (Vz) und Ablaufventilen (Va) gegeneinander entkoppelt werden.

7. Verfahren nach Anspruch 1 bis 6,
dadurch gekennzeichnet,
daß als Feinfilter (11) der Filtereinheiten (FE) hochtemperaturbeständige Filter, wie Keramik- oder Edelstahlfilter, verwendet werden, die verschmutzt ausgetauscht und in einem durch Temperatur und Zeit vorgebbaren Brennvorgang gereinigt werden.

8. Vorrichtung zur Durchführung des Verfahrens nach einem der Ansprüche 1 bis 7,
dadurch gekennzeichnet,
daß eine Saugpumpe (P1 bzw.P11 und P12) den oberen und/oder den unteren Abwasseranteil (Ao und/oder Au) aus dem Sammelbehälter (10) saugt und den angesaugten Abwasseranteil über eine Überströmpumpe (P2 bzw. P21 und P22) mindestens einem Feinfilterkreis (FFK1, FFK2, FFK3; FFK11, FFK12; FFK21, FFK22) umlaufend zuführt,
daß das aus den Feinfilterkreisen ausgefilterte Wasser dem örtlichen Abwasserkanal (AWK) und das ausgefilterte Lösungsmittel einem Lösungsmittelbehälter (20) zuführbar ist und
daß die im Feinfilterkreis umlaufend verbleibenden Verunreinigungen in einen Sondermüllbehälter (30) ableitbar sind.

9. Vorrichtung nach Anspruch 8,
dadurch gekennzeichnet,
daß eine einzige Saugpumpe (P1) über zwei Absperrventile (V1 und V2) und zwei Absaugleitungen (L1, L2) wahlweise mit dem oberen und unteren Teil des Sammelbehälters (10) verbindbar ist,
daß die Saugpumpe (P1) über eine einzige Überströmpumpe (P2) über Zulaufventile (Vz) mehrere parallel geschaltete Feinfilterkreise (FFK1, FFK2, FFK3) speist, die ausgangsseitig über Ablaufventile (Va) auf den Eingang der Überströmpumpe (P2) zurückgeführt sind und
daß das aus den Feinfilterkreisen (FFK1, FFK2, FFK3) ausgefilterte Lösungsmittel oder Abwasser über eine Schalteinrichtung (V3) wahlweise dem Lösungsmittelbehälter (20) oder dem örtlichen Abwasserkanal (AWK) zuführbar ist (Fig. 1).

10. Vorrichtung nach Anspruch 8,
dadurch gekennzeichnet,
daß dem oberen und dem unteren Abwasseranteil (Ao und Au) je eine Saugpumpe (P11 und P12) mit eigener Ablaufleitung (L1, L2) zugeordnet ist,
daß die Saugpumpen (P11, P12) jeweils über eine zugeordnete Überströmpumpe (P21 bzw. P22) mehrere Feinfilterkreise (FFK11, FFK12; FFK21, FFK22) speisen,
daß das aus den dem oberen Abwasseranteil (Ao) zugeordneten Feinfilterkreisen (FFK11, FFK12) ausgefilterte Lösungsmittel dem Lösungsmittelbehälter (20) und das aus den dem unteren Abwasseranteil (Au) zugeordneten Feinfilterkreisen (FFK21, FFK22) ausgefilterte Wasser dem örtlichen Abwasserkanal (AWK) zuführbar ist und
daß die in allen Feinfilterkreisen (FFK11, FFK12, FFK21, FFK22) zirkulierenden Verunreinigungen in den Sondermüllbehälter (30) abführbar sind (Fig. 2).

11. Vorrichtung nach einem der Ansprüche u bis 10,
dadurch gekennzeichnet,
daß ein Feinfilterkreis (FFK1, FFK2, FFK3, FFK11, FFK12, FFK21, FFK22) zwischen dem Zulaufventil (Vz) und dem Ablaufventil (Va) mindestens eine Filtereinheit (FE) aufweist, die aus einen in einem Sammelrohr (12) mit Ablauf (14) untergebrachten, durchströmbaren Filterelement (11) besteht, und
daß die axialen Enden des Filterelementes (11) mittels lösbarer Verschraubungen (13) in den Feinfilterkreis einbezogen sind, wobei das Filterelement (11) in den Verschraubungen (13) mittels Dichtungselementen (18) zum Sammelrohr (12) hin abgedichtet ist (Fig. 3).

12. Vorrichtung nach Anspruch 12,
dadurch gekennzeichnet,
daß in jedem Feinfilterkreis (FFK1, FFK2, FFK3, FFK11, FFK12, FFK21, FFK22) mindestens zwei Filtereinheiten (FE) mit Verschraubungen (13) austauschbar in Reihe angeordnet sind.

13. Vorrichtung nach einem der Ansprüche 4 bis 12,
dadurch gekennzeichnet,
daß das ausgefilterte Abwasser und/oder Lösungsmittel sowie die abgeleiteten Verunreinigungen über individuelle Meß- und/oder Schalteinrichtungen (M1, M2, M11, M12, M21, M22) dem Abwasserkanal (AWK), dem Lösungsmittelbehälter (20) und dem Sondermüllbehälter (20) dosiert zuführbar sind.
